# EUROPÄISCHE PATENTSCHRIFT

(11) **EP 3 113 337 B1**
(45) Veröffentlichungstag und Bekanntmachung des Hinweises auf die Patenterteilung: **05.02.2020**
(21) Anmeldenummer: 16174295.2
(22) Anmeldetag: 14.06.2016
(51) Int. Cl.: B22C 9/08, B22D 19/00, B22D 25/02, H02K 15/00

(54) **VERFAHREN UND GIESSFORM ZUR HERSTELLUNG EINES LÄUFERS**
METHOD AND CASTING MOULD FOR MANUFACTURING A ROTOR
PROCEDE ET MOULE DESTINES A LA FABRICATION D'UN ROTOR

(30) Priorität: 30.06.2015 DE 102015212224
(43) Veröffentlichungstag der Anmeldung: 04.01.2017
(73) Patentinhaber: Breuckmann GmbH & Co. KG, 42579 Heiligenhaus (DE)
(72) Erfinder: Bárdos, András, 42579 Heiligenhaus (DE); Breuckmann, Michael, 42579 Heiligenhaus (DE)
(74) Vertreter: advotec.

(56) Entgegenhaltungen:
- EP-A1- 2 874 286
- WO-A1-2007/095719
- WO-A1-2015/070171
- DE-A1-102013 208 151
- DE-B3-102013 101 962
- GB-A- 633 986

## Beschreibung

Die Erfindung betrifft ein Verfahren zur Herstellung eines Läufers für eine Elektromaschine, insbesondere Elektromotor, Drehstrommotor, Generator oder dergleichen, wobei der Läufer aus einem Metallkern, zumindest einem ersten und einem zweiten Kurzschlussring, und lamellenförmigen Leitern, die die Kurschlussringe verbinden, ausgebildet wird, wobei das Verfahren mit einer Gießmaschine und einer Gießform durchgeführt wird, wobei der Metallkern in der Gießform angeordnet und ein Metall in der Gießform am Metallkern angebracht wird, wobei das Metall geschmolzen und in die Gießform eingebracht wird, wobei das Metall, Kupfer, Aluminium, Silber oder eine Legierung eines dieser Metalle ist.

Bei der Herstellung von derartigen Läufern, die regelmäßig auch als Rotor bezeichnet werden oder prinzipiell auch als Stator eingesetzt werden können, wird ein aus einem Stapel von Eisenblechen gebildeter Eisenkern bzw. Metallkern des Läufers ausgegossen, so dass an einem äußeren Umfang des Läufers beziehungsweise des Metallkerns ein elektrisch kurgeschlossener Leiterkäfig aus Kupfer oder Aluminium ausgebildet wird. Das Ausgießen des Metallkerns erfolgt regelmäßig in einem Druckgussverfahren, wobei das gegossene Kupfer oder Aluminium eine vergleichsweise hohe Porosität aufweist. Dies ist jedoch nachteilig, da die Porosität insbesondere die physikalischen und elektrischen Eigenschaften des gegossenen Leiterkäfigs gegenüber theoretisch möglichen Eigenschaften des Kupfers oder Aluminiums bei Nichtvorliegen von Porosität mindert. So wird durch eine Bildung von Poren oder Lunkern ein elektrisch und auch mechanisch wirksamer Querschnitt der jeweiligen Leiter verringert. Durch eine verminderte Porosität des gegossenen Metalls kann ein Läufer für beispielsweise Drehstrommotoren mit verbesserten physikalischen und elektrischen Eigenschaften und damit einem hohen Wirkungsgrad hergestellt werden. Ein mechanisch stabiler Leiterkäfig ermöglicht weiter eine höhere Rotationsgeschwindigkeit eines Läufers und damit einen verbesserten Wirkungsgrad eines beispielsweise Drehstrommotors. Auch kann eine Poren- oder Lunkerbildung bei Läufern, insbesondere Rotoren, neben den vorbeschriebenen Nachteilen, auch noch zu einem erhöhten Aufwand beim Auswuchten und zu einer lokalen Erwärmung beim Betrieb führen. Auch sind bei den betreffenden Läufern die lamellenförmigen Leiter nur wenige Millimeter dünn, weshalb das geschmolzene Metall beim Durchströmen von die Leiter ausbildenden Nuten vergleichsweise schnell abkühlt, was eine Porenbildung beziehungsweise Lunkerbildung mindert.

Einige bekannte Gießverfahren zum Gießen von Läufern bzw. Rotoren versuchen die vorbeschriebenen Nachteile zu vermeiden. So beschreibt die EP 2 465 624 A1 ein Gießverfahren, bei dem das geschmolzene Metall mittels eines Druckgussverfahrens in eine Gießform eingebracht wird. Bei dem Gießverfahren wird eine Temperaturüberhöhung einer Schmelze möglichst niedrig gehalten, wobei ein hoher Abkühlungsgrad der Schmelze bewirken soll, dass nur eine geringe Zahl von Poren in dem gegossenen Metall vorhanden ist.

Aus der GB 633 986 ist eine symmetrische Gießform für einen Rotor mit zwei Kurzschlussringen bzw. ein Verfahren zur Herstellung des Rotors mit den Merkmalen des Oberbegriffs des Anspruchs 1 bekannt, wobei für jeden der Kurzschlussringe Gießkanäle mit jeweils einem Anschnitt ausgebildet sind. Die Gießkanäle des einen Kurzschlussringes werden als ein Einlass und die Gießkanäle des anderen Kurzschlussringes werden als ein Auslass für flüssiges Metall verwendet.

Bei einem aus der US 6,786,272 B2 bekannten Verfahren zum Gießen von Kupferrotoren beträgt ein Gießdruck mindestens 50 MPa, wobei eine Standzeit der Gießform durch ein Vorheizen der Gießform verlängert werden soll.

Die DE 10 2013 208151 A1 betrifft ein Gießverfahren zum Gießen von Kupferrotoren, bei denen das geschmolzene Metall mit einer vergleichsweise geringen Strömungsgeschwindigkeit an einem Anschnitt der Gießform in diese eingebracht wird. Hierdurch soll ein ruhigeres, turbulenzarmes Füllen der Gießform und damit eine geringere Porosität erzielt werden.

Die WO 2007/095719 A1 beschreibt ein Heißkanalsystem zum Spritzgießen von unter anderem Magnesiumlegierungen in eine Form. Insbesondere ist eine Druckbeaufschlagung des spritzgegossenen Materials nach dem Einfüllen in die Form vorgesehen, um eine eventuell erhöhte Porosität durch Schwindung beim Abkühlen des Materials zu verhindern. Das Heißkanalsystem ist dabei so beschaffen bzw. eine Befüllung der Form erfolgt derart über verschiedene Anschnitte, dass sich gleichzeitig beim Befüllen ein Schmelzestillstand an den Anschnitten einstellt und die Druckbeaufschlagung gleichmäßig über die Anschnitte auf das Material in der Form wirkt. So soll verhindert werden, dass beispielsweise eine Erstarrung von Material an einem Anschnitt bereits beginnt, bevor die Form vollständig gefüllt ist, was zu einer erhöhten Porosität an diesem Anschnitt führen würde.

Die DE 10 2013 101 962 B3 zeigt eine Gießmaschine mit einer Gießform zur Herstellung eines beliebigen Werkstücks, wobei die Gießform mehrere Anschnitte aufweist. Eine Schmelze in Gießkanälen der Gießform wird mittels elektromagnetischer Felder erhitzt, gebremst oder beschleunigt, sodass eine möglichst turbulenzfreie Zuführung der Schmelze erfolgen soll.

Es ist daher Aufgabe der Erfindung ein Verfahren zur Herstellung eines Läufers vorzuschlagen, welches eine Porosität eines Leiterkäfigs weiter reduziert.

Diese Aufgabe wird durch ein Verfahren mit den Merkmalen des Anspruchs 1 gelöst.

Bei dem erfindungsgemäßen Verfahren zur Herstellung eines Läufers für eine Elektromaschine, insbesondere Elektromotor, Drehstrommotor, Generator oder dergleichen, wird der Läufer aus einem Metallkern, zumindest einem ersten und einem zweiten Kurschlussring, und lamellenförmigen Leitern, die die Kurzschlussringe verbinden, ausgebildet, wobei das Verfahren mit einer Gießmaschine und einer Gießform durchgeführt wird, wobei der Metallkern in der Gießform angeordnet und ein Metall in der Gießform am Metallkern angebracht wird, wobei das Metall geschmolzen und in die Gießform eingebracht wird, wobei das Metall Kupfer, Aluminium, Silber oder eine Legierung eines dieser Metalle ist, wobei der Läufer mit seiner Rotationsachse vertikal relativ zu einer Horizontalebene angeordnet wird, wobei der erste Kurzschlussring tiefer als der zweite Kurzschlussring angeordnet wird, wobei das Metall an einem ersten Anschnitt der Gießform an dem ersten Kurzschlussring, und an einem zweiten Anschnitt der Gießform an dem zweiten Kurzschlussring in die Gießform eingebracht wird, wobei eine erste Schmelzefront des Metalls des ersten Anschnitts mit einer zweiten Schmelzefront des Metalls des zweiten Anschnitts innerhalb der Gießform im zweiten Kurzschlussring zusammentrifft.

Abweichend von dem aus dem Stand der Technik bekannten Gießverfahren für Läufer mit einem Metallkern ist bei dem erfindungsgemäßen Verfahren vorgesehen, dass geschmolzene Metall über zumindest zwei Anschnitte in die Gießform einzubringen. Dabei sind der erste Anschnitt der Gießform an dem ersten Kurzschlussring und der zweite Anschnitt der Gießform an dem gegenüberliegenden, zweiten Kurzschlussring angeordnet. Prinzipiell kann der Läufer auch noch weitere Kurzschlussringe aufweisen, wobei diese dann über einen weiteren Anschnitt der Gießform mit geschmolzenem Metall versorgt werden können. Die Kurzschlussringe können kreisringförmig ausgebildet sein oder auch eine andere geeignete, einem Ring angenäherte Form aufweisen. Bei dem Ausgießen der Gießform mit dem Metallkern kann gegenüber einem einzigen Anschnitt an einem Kurzschlussring vergleichsweise viel geschmolzenes Metall innerhalb kurzer Zeit in die Gießform eingebracht werden. Dadurch wird es möglich im Rahmen des erfindungsgemäßen Verfahrens anstelle einer Gießgeschwindigkeit eine Strömungsgeschwindigkeit innerhalb der Gießform zu vermindern. Dies betrifft insbesondere die Strömungsgeschwindigkeit des geschmolzenen Metalls innerhalb von Nuten des Metallkerns, die ausgegossen die Leiter des gegossenen Läufers, bzw. Rotors oder Stators ausbilden. Ein Querschnitt der Nuten ist konstruktiv vorgegeben, so dass eine Strömungsgeschwindigkeit des geschmolzenen Metalls über eine Variation eines einzelnen Anschnitts wenig beeinflussbar ist. Beispielsweise können die Nuten an den dicksten Stellen nur 0,3 mm bis 3,5 mm dick sein. Insbesondere kann eine minimale Strömungsgeschwindigkeit, die zur vollständigen Füllung der Nut und des angeschlossenen Kurzschlussrings vor einer Erstarrung des geschmolzenen Metalls erforderlich ist, nicht unterschritten werden. Das Auffüllen kann somit langsamer erfolgen, was eine niedrigere Strömungsgeschwindigkeit in den Nuten ermöglicht und eine Porosität vermindern hilft.

Erfindungsgemäß wird bei dem Gießen eine erste Schmelzefront des Metalls des ersten Anschnitts mit einer zweiten Schmelzefront des Metalls des zweiten Anschnitts innerhalb der Gießform zusammentreffen. So treffen die Schmelzefronten im Bereich des zweiten Kurzschlussrings, oder im zweiten Kurzschlussring zusammen. Der Ort des Zusammentreffens der jeweiligen Schmelzefronten innerhalb der Gießform kann von der Lage des Läufers in der Gießform beziehungsweise relativ zu einer Horizontalebene abhängig sein.

So wird der Läufer mit seiner Rotationsachse vertikal relativ zu einer Horizontalebene in der Gießform angeordnet. Da der Läufer vertikal oder geneigt relativ zu der Horizontalebene angeordnet wird, ist der erste Kurzschlussring unterhalb beziehungsweise tiefer als der zweite Kurzschlussring angeordnet. Eine Entlüftung der Gießform beziehungsweise einer Kavität der Gießform kann dann leicht über den zweiten Kurzschlussring erfolgen. Optional kann es auch vorgesehen sein, die Gießform mit einem Vakuum zu beaufschlagen.

Demnach kann das Metall unter Druck, drucklos oder auch durch Beaufschlagung mit einem Vakuum in die Gießform eingebracht werden.

Vorzugsweise kann der Metallkern ein Eisenkern sein. Wobei sich auch andere Metalle, wie Molybdän, Nickel, Mangan, Zink und eisenhaltige Legierungen mit einem oder mehreren dieser Metalle zur Ausbildung des Metallkerns aus beispielsweise einem Blechpaket eignen.

Eine Kavität der Gießform kann zu 50%, vorzugsweise zu 75%, besonders bevorzugt zu 90% über den ersten Anschnitt mit dem Metall gefüllt werden. Eine Füllung zu 50% ist vorteilhaft, wenn der Läufer mit seiner Rotationsachse horizontal angeordnet wird. Eine Befüllung mit bis zu 90% über den ersten Anschnitt kann erfolgen, wenn der Läufer im Wesentlichen vertikal angeordnet wird. Eine Entlüftung der Gießform wird wesentlich vereinfacht, wenn das geschmolzene Metall über den ersten Anschnitt in der Kavität der Gießform von unten nach oben hin aufsteigt.

Der erste und/oder der zweite Anschnitt können jeweils als ein Anschnittsystem mit einer Mehrzahl von Anschnittquerschnitten und zugehörigen Schmelzekanälen ausgebildet sein. So kann ein Kurzschlussring über mehrere Schmelzekanäle mit jeweils Anschnittquerschnitten mit geschmolzenem Metall versorgt werden, wobei die Anschnittquerschnitte dann den Anschnitt des Kurzschlussrings ausbilden. Durch die Verwendung mehrerer Anschnittquerschnitte kann das geschmolzene Metall beispielsweise gleichzeitig an verschiedenen Stellen des Kurzschlussrings in diesen eingebracht werden, wodurch eine gleichmäßigere und ruhigere Füllung der Gießform erzielt werden kann. Die mehreren Schmelzekanäle können von einem einzelnen Schmelzekanal aus verzweigen.

Der zweite Anschnitt kann an einen Schmelzekanal angeschlossen sein, der innerhalb oder außerhalb des Metallkerns in der Gießform verläuft. Der Schmelzekanal kann beispielsweise als ein Rohr ausgebildet sein, welches innerhalb des Läufers und koaxial zu einer Rotationsachse des Läufers angeordnet ist. Weiter kann der Schmelzekanal auch außerhalb des Läufers angeordnet bzw. in der Gießform ausgebildet sein.

Weiter kann vorgesehen sein, dass das Metall gleichzeitig in die Gießform, jedoch mit unterschiedlichen Strömungsgeschwindigkeiten an den jeweiligen Anschnitten eingebracht wird. Dies kann bei einer vertikalen oder geneigten Lage des Läufers in der Gießform sinnvoll sein.

In einer Ausführungsform des Verfahrens kann das Metall zunächst in den ersten Anschnitt, und nachfolgend in den zweiten Anschnitt der Gießform eingebracht werden. Wesentlich dabei ist dann, dass das über den ersten Anschnitt eingebrachte geschmolzene Metall noch nicht erstarrt ist, wenn über den zweiten Anschnitt der Gießform Metall eingebracht wird, so dass sich die jeweiligen Schmelzefronten innerhalb der Gießform vereinigen können. Beispielsweise kann bei einem vertikal in der Gießform angeordneten Läufer das geschmolzene Metall zunächst über den ersten Anschnitt in die Kavität hineinfließen und parallel über einen Schmelzekanal zu dem zweiten Anschnitt aufsteigen und in die Kavität beziehungsweise den zweiten Kurzschlussring hineinfließen, bevor der Schmelzespiegel beziehungsweise eine erste Schmelzefront des Metalls in der Gießform den zweiten Kurzschlussring erreicht hat. So kann eine vorteilhafte Entlüftung der Gießform bei gleichzeitig schneller und ruhiger Füllung ermöglicht werden.

Optional kann der erste Anschnitt einen ersten Querschnitt aufweisen, der von einem zweiten Querschnitt des zweiten Anschnitts abweicht. Beispielsweise kann der erste Querschnitt bei einem steigenden Guss unterhalb des zweiten Querschnitts angeordnet sein, wobei der erste Querschnitt auch größer sein kann als der zweite Querschnitt. So kann sichergestellt werden, dass zunächst ein Großteil der Kavität über den ersten Querschnitt befüllt werden kann. Umgekehrt kann auch der zweite Querschnitt größer als der erste Querschnitt ausgebildet sein, wobei dann eine gegebenenfalls schnellere Füllung der Kavität über den zweiten Querschnitt ermöglicht wird. In Abhängigkeit der Ausbildung der Schmelzekanäle der Gießform und der Lage des Läufers innerhalb der Gießform sowie einer Größe der jeweiligen Querschnitte der Anschnitte kann auch eine gleichmäßige Füllung der Gießform mit geschmolzenem Metall über den ersten und den zweiten Anschnitt eingestellt werden.

Besonders vorteilhaft ist es, wenn eine kolbenlose Gießmaschine oder eine Gießmaschine mit einem Kolben verwendet wird. Der Kolben kann relativ zu einer Horizontalebene horizontal, schräg oder vertikal angeordnet sein. Eine Porosität des gegossenen Metalls kann je nach Kolbenanordnung unter den dadurch verbesserten Strömungsverhältnisse beim Gießen gemindert werden. Eine Gießmaschine kann auch mehrere Kolben aufweisen, die jeweils einen Anschnitt speisen.

Prinzipiell kann das Gießverfahren mit nur einer Gießmaschine durchgeführt werden, wobei für die zumindest zwei Anschnitte am ersten und am zweiten Kurzschlussring auch jeweils eine Gießmaschine verwendet werden kann. Dies kann insbesondere bei der Herstellung des Läufers in großen Stückzahlen vorteilhaft sein, da dann gegebenenfalls eine Taktzeit der Gießmaschinen verringert werden kann. Bei dem Verfahren kann das Metall vollständig oder teilweise geschmolzen sein. In Abhängigkeit einer Konzentration des Kupfers, Aluminiums oder des Silbers kann das Metall in der Gießform unterschiedlich erstarren oder auch schon während einer Füllung der Kavität nur noch teilweise geschmolzen sein. So können die Eigenschaften des erhaltenen Läufers in gewünschter Weise beeinflusst werden.

Vorteilhaft kann das Metall in die Kavität, vorzugsweise in Nuten des Läufers mit einer Strömungsgeschwindigkeit von < 15 m/s, vorzugsweise von < 8 m/s, besonders bevorzugt von 4 bis 8 m/s eingebracht werden. Bei derartigen Strömungsgeschwindigkeiten an einem Anschnitt oder auch innerhalb der Kavität kann ein besonders ruhiges Füllen der Kavität mit dem geschmolzenen Metall ermöglicht werden. Ein Leitwert des Metalls des erhaltenen Läufers kann dadurch wesentlich verbessert werden. Ein ruhigeres, turbulenzarmes Füllen der Kavität beziehungsweise Nuten kann zu einer verminderten Bildung von Oxyden an Korngrenzen des Gefüges des gegossenen Metalls beitragen, was sich wiederum positiv auf den Leitwert auswirken kann.

Bei dem Einbringen des Metalls in die Gießform beziehungsweise Kavität der Gießform kann dann auch zumindest teilweise eine laminare Strömung ausgebildet werden. Die laminare Strömung kann vorzugsweise im Bereich von Nuten des Metallkerns, die gegossen die Leiter ausbilden, ausgebildet werden.

Ein Legierungsanteil des Metalls kann 75 bis 100 Gewichtsprozent betragen. Neben sogenannten Reinkupfer oder Reinaluminium kann auch Kupfer beziehungsweise Aluminium oder Silber mit Legierungsbestandteilen vergossen werden, welche die physikalischen Eigenschaften des Läufers positiv beeinflussen und/oder eine Durchführung des Gießverfahrens begünstigen.

Mittels des Verfahrens kann ein Läufer hergestellt werden, bei dem ein elektrischer Leitwert des gegossenen Metalls ≥ 45 MS/m, vorzugsweise ≥ 55 MS/m, besonders bevorzugt 56 bis 59 MS/m beträgt. Dieser elektrische Leitwert des gegossenen Metalls kann durch eine verminderte Bildung von Oxyden an Korngrenzen eines Gefüges des gegossenen Metalls erzielt werden. Weiter kann ein elektrisch wirksamer Leiterquerschnitt vergrößert werden, wenn eine Porosität des Metalls als geringes beziehungsweise eine Bildung von Lunkern vermieden wird.

Nachfolgend wird die Erfindung unter Bezugnahme auf die beigefügten Zeichnungen näher erläutert.

Es zeigen:
- **Fig. 1**: eine vereinfachte Schnittdarstellung einer Gießform;
- **Fig. 2**: einen Läufer in einer Seitenansicht;
- **Fig. 3**: der Läufer in einer Schnittansicht entlang einer Linie III-III aus **Fig.2****;**
- **Fig. 4**: der Läufer in einer Schnittansicht entlang einer Linie IV-IV aus **Fig. 2** und **Fig. 3** in einer Gießform in einer Schnittansicht;
- **Fig. 5**: einen weiteren Läufer in einer Seitenansicht.

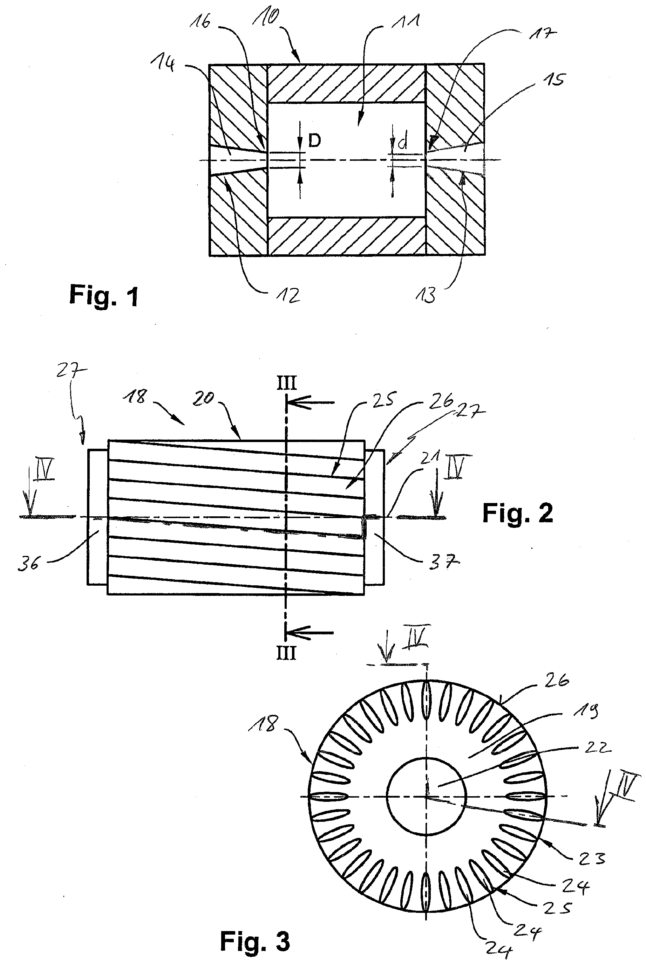

Die **Fig. 1** zeigt eine Prinzipdarstellung einer Gießform 10 in einer Schnittansicht. Die Gießform 10 ist an eine hier nicht dargestellte Gießmaschine angeschlossen und bildet eine Kavität 11 aus. Bei einem Gießvorgang wird mittels der Gießmaschine geschmolzenes Metall in die Kavität 11 eingebracht, wobei dieses durch einen ersten Anschnitt 12 und einen zweiten Anschnitt 13 an der Gießform 10 in die Kavität 11 gelangt. Der erste Anschnitt 12 und der zweite Anschnitt 13 weisen jeweils die Form eines Konus 14 beziehungsweise 15 auf, der jeweils hin zu einem kavitätsseitigen Ende 16 beziehungsweise 17 verjüngt ist. So weist der erste Anschnitt 12 an dem kavitätsseitigen Ende 16 einen Durchmesser D und der zweite Anschnitt 13 an dem kavitätsseitigen Ende 17 einen Durchmesser d mit dem jeweils kleinsten Durchflussquerschnitt für den jeweiligen Anschnitt 12 beziehungsweise 13 auf. Eine maximale Strömungsgeschwindigkeit des geschmolzenen Metalls bei einem Einbringen desselben in die Kavität 11 tritt daher an den jeweiligen Enden 16 und 17 der Anschnitte 12 beziehungsweise 13 auf. Die betreffende Strömungsgeschwindigkeit wird kurz vor einer vollständigen Füllung der Kavität 11 wesentlich verringert, wobei dann ein Gießdruck infolge einer Kompression der Schmelze und der darin enthaltenen Gase sowie der in der Kavität 11 gegebenenfalls vorhandenen Luftanschlüsse wesentlich erhöht wird. Die für das Verfahren in Betracht zu ziehende Strömungsgeschwindigkeit betrifft daher eine auf eine Füllzeit der Gießform bezogene, zumindest teilweise lineare Strömungsgeschwindigkeit bis zur nahezu vollständigen Füllung der Kavität 11 beziehungsweise bis zum Anstieg des Gießdrucks auf einen maximalen Wert.

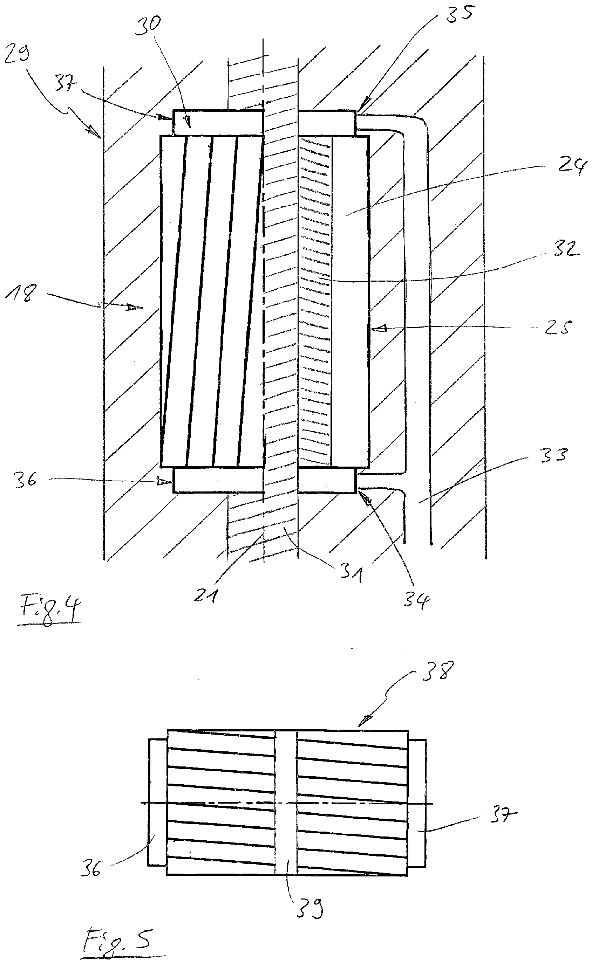

Eine Zusammenschau der **Fig. 2** und **3** zeigt einen als Rotor 18 ausgebildeten Läufer für einen Elektromotor, wobei der Rotor 18 mit dem erfindungsgemäßen Verfahren hergestellt wurde. Der Rotor 18 ist aus Eisenblechen 19 gebildet, die in einer Stapelanordnung 20 in Richtung einer Rotationsachse 21 des Rotors 18 dicht aneinander anliegend aufgereiht sind. In den Eisenblechen 19 ist jeweils eine Durchgangsöffnung 22 zur Aufnahme einer hier nicht dargestellten Antriebswelle sowie entlang eines Umfangs 23 der Eisenbleche 19 äquidistant angeordnete Nuten 24 ausgebildet. Die Nuten 24 bilden innerhalb der Stapelanordnung 20 hier nicht mehr ersichtliche Kanäle aus, die mittels des erfindungsgemäßen Verfahrens mit geschmolzenem Kupfer oder einer Kupferlegierung ausgegossen werden. Nach einem Erstarren des Metalls sind sämtliche Nuten 24 mit Kupfermaterial gefüllt, so dass jeweils ein elektrischer Leiter 25 ausgebildet ist. Auf einer Umfangsoberfläche 26 des Rotors 18 ist ein Verlauf der Leiter 25 durch das hier sichtbare Kupfermaterial erkennbar. An jeweils Enden 27 des Rotors 18 sind kreisringförmige Kurzschlussringe 36, 37 an die Stapelanordnung 20 angegossen. Eine in **Fig. 4** gezeigte Gießform 29 des Rotors 18 ist so ausgebildet, dass die Kurzschlussringe 36, 37 im Wesentlichen gleichzeitig mit einem Verguss der Nuten 24 ausgebildet werden. Folglich sind die Leiter 25 über die Kurzschlussringe 36, 37 miteinander verbunden. Insbesondere beträgt ein elektrischer Leitwert der Leiter 25 sowie der Kurzschlussringe 36, 37 mindestens 45 MS/m.

Die **Fig. 4** zeigt den Rotor 18 beziehungsweise die Stapelanordnung 20 in der Gießform 29 in jeweils einer Schnittansicht. Eine Teilungsebene der Gießform 29 ist hier nicht näher dargestellt. In eine Kavität 30 der Gießform 29 ist ein zylinderförmiger Kern 31 mit der Stapelanordnung 20 beziehungsweise einem Eisenkern 32 eingesetzt. Der Kern 31 verschließt die koaxiale Durchgangsöffnung 22 in Richtung der Rotationsachse 21 des Rotors 18. In der Gießform 29 ist ein Schmelzekanal 33 ausgebildet, über den einem ersten Anschnitt 34 und einem zweiten Anschnitt 35 an dem ersten Kurzschlussring 36 beziehungsweise dem zweiten Kurzschlussring 37 geschmolzenes Kupfer zugeführt werden kann. Der Rotor 18 ist relativ zu einer hier nicht dargestellten Horizontalebene mit seiner Rotationsachse 21 vertikal in der Gießform 29 angeordnet, so dass der erste Kurzschlussring 36 unterhalb des zweiten Kurzschlussrings 37 in der Gießform 29 angeordnet ist. Der erste Kurzschlussring 36 ist über die Nuten 24 beziehungsweise die Leiter 25 mit dem zweiten Kurzschlussring 37 verbunden. Bei einem Füllen der Gießform 29 strömt das geschmolzene Kupfer zunächst über den Schmelzekanal 33 und den ersten Anschnitt 34 in den ersten Kurzschlussring 36 von unten kommend ein und steigt innerhalb der Kavität 30 beziehungsweise in den Nuten 24 in Richtung des zweiten Kurzschlussrings 37 auf. Parallel dazu steigt im Schmelzekanal 33 das geschmolzene Kupfer ebenfalls auf und gelangt über den zweiten Anschnitt 35 in den zweiten Kurzschlussring 37 kurz bevor das in den Nuten 24 aufsteigende geschmolzene Kupfer diesen erreicht hat. Eventuell im zweiten Kurzschlussring 37 befindliche Gase werden über hier nicht dargestellte Kanäle im Bereich des zweiten Kurzschlussrings 37 aus der Kavität 30 ausgleitet. Dadurch dass eine Befüllung der Kavität 30 über den zweiten Anschnitt 35 am zweiten Kurzschlussring 37 erfolgt, ist es nicht mehr erforderlich das geschmolzene Metall in den Nuten 24 schnell aufsteigen zu lassen, um ein Erstarren des Metalls vor einer vollständigen Füllung der Kavität 30 zu verhindern. Durch die dann verminderte Fließgeschwindigkeit des geschmolzenen Kupfers in den Nuten 24 kann eine Porosität des gegossenen Kupfers wesentlich vermindert werden, wodurch sich verbesserte mechanische und elektrische Eigenschaften und damit ein verbesserter Wirkungsgrad des Rotors 18 ergeben.

Die **Fig. 5** zeigt eine weitere Ausführungsform eines Rotors 38 die im Unterschied zu dem Rotor aus **Fig. 2** einen dritten Kurzschlussring 39 aufweist. Bei einer Herstellung des Rotors 38 wurde der dritte Kurzschlussring 39 über einen dritten Anschnitt, der hier nicht ersichtlich ist, beim Gießen mit flüssigem Metall versorgt. Der dritte Kurzschlussring 39 ist zwischenliegend dem ersten Kurzschlussring 36 und zweiten Kurzschlussring 37 angeordnet.

## Patentansprüche

1. Verfahren zur Herstellung eines Läufers (18, 38) für eine Elektromaschine, insbesondere Drehstrommotor, wobei der Läufer aus einem Metallkern, zumindest einem ersten und einem zweiten Kurzschlussring (36, 37, 39), und lamellenförmigen Leitern (25), die die Kurzschlussringe verbinden, ausgebildet wird, wobei das Verfahren mit einer Gießmaschine und einer Gießform (10, 29) durchgeführt wird, wobei der Metallkern in der Gießform angeordnet und ein Metall in der Gießform am Metallkern angebracht wird, wobei das Metall geschmolzen und in die Gießform eingebracht wird, wobei das Metall Kupfer, Aluminium, Silber oder eine Legierung eines dieser Metalle ist,
**dadurch gekennzeichnet,**
**dass** der Läufer mit seiner Rotationsachse (21) vertikal relativ zu einer Horizontalebene angeordnet wird, wobei der erste Kurzschlussring tiefer als der zweite Kurzschlussring angeordnet wird, wobei das Metall an einem ersten Anschnitt (12, 34) der Gießform an dem ersten Kurzschlussring (36), und an einem zweiten Anschnitt (13, 35) der Gießform an dem zweiten Kurzschlussring (37) in die Gießform eingebracht wird, wobei eine erste Schmelzefront des Metalls des ersten Anschnitts mit einer zweiten Schmelzefront des Metalls des zweiten Anschnitts innerhalb der Gießform im zweiten Kurzschlussring zusammentrifft.

2. Verfahren nach Anspruch 1,
**dadurch gekennzeichnet,**
**dass** das Metall unter Druck oder drucklos in die Gießform (10, 29) eingebracht wird.

3. Verfahren nach Anspruch 1 oder 2,
**dadurch gekennzeichnet,**
**dass** der Metallkern ein Eisenkern (32) ist.

4. Verfahren nach einem der vorangehenden Ansprüche,
**dadurch gekennzeichnet,**
**dass** eine Kavität (11, 30) der Gießform (10, 29) zu 50%, vorzugsweise zu 75%, besonders bevorzugt zu 90% über den ersten Anschnitt (12, 34) mit dem Metall gefüllt wird.

5. Verfahren nach einem der vorangehenden Ansprüche,
**dadurch gekennzeichnet,**
**dass** der erste und/oder der zweite Anschnitt (12, 13, 34, 35) jeweils als ein Anschnittsystem mit einer Mehrzahl von Anschnittquerschnitten und zugehörigen Schmelzekanälen (33) ausgebildet ist.

6. Verfahren nach einem der vorangehenden Ansprüche,
**dadurch gekennzeichnet,**
**dass** der zweite Anschnitt (13, 35) an einen Schmelzekanal (33) angeschlossen ist, der innerhalb oder außerhalb des Metallkerns verläuft.

7. Verfahren nach einem der vorangehenden Ansprüche,
**dadurch gekennzeichnet,**
**dass** das Metall zunächst über den ersten Anschnitt (12, 34), und nachfolgend über den zweiten Anschnitt (13, 35) der Gießform (10, 29) eingebracht wird.

8. Verfahren nach einem der vorangehenden Ansprüche,
**dadurch gekennzeichnet,**
**dass** der erste Anschnitt (12, 34) einen ersten Querschnitt (D) aufweist, der von einem zweiten Querschnitt (d) des zweiten Anschnitts (13, 35) abweicht.

9. Verfahren nach einem der vorangehenden Ansprüche,
**dadurch gekennzeichnet,**
**dass** eine kolbenlose Gießmaschine oder eine Gießmaschine mit einem Kolben verwendet wird.

10. Verfahren nach einem der vorangehenden Ansprüche,
**dadurch gekennzeichnet,**
**dass** für die zumindest zwei Anschnitte (12, 13, 34, 35) am ersten und am zweiten Kurzschlussring (36, 37, 39) jeweils eine Gießmaschine verwendet wird.

11. Verfahren nach einem der vorangehenden Ansprüche,
**dadurch gekennzeichnet,**
**dass** bei Einbringen des Metalls in die Gießform (10, 29) in einer Kavität (11, 30) der Gießform zumindest teilweise eine laminare Strömung ausgebildet wird.

12. Verfahren nach einem der vorangehenden Ansprüche,
**dadurch gekennzeichnet,**
**dass** ein Legierungsanteil des Metalls 75 bis 100 Gewichtsprozent beträgt.

13. Verfahren nach einem der vorangehenden Ansprüche,
**dadurch gekennzeichnet,**
**dass** ein elektrischer Leitwert des gegossenen Metalls des Rotors (18, 38) ≥ 45 MS/m, vorzugsweise ≥ 55 MS/m, besonders bevorzugt 56 bis 59 MS/m beträgt.

## Claims

1. A method for producing a rotor (18, 38) for an electric machine, in particular a three-phase motor, the rotor being formed by a metal core, at least a first and a second short-circuit ring (36, 37, 39) and lamellar conductors (25) which connect the short-circuit rings, the method being performed with a casting machine and a casting mold (10, 29), the metal core being disposed in the casting mold and a metal being fixed to the casting mold at the metal core, the metal being melted and introduced into the casting mold, the metal being copper, aluminum, silver or an alloy of these metals,
**characterized in that**,
the rotor is disposed vertically with its rotational axis (21) with respect to a horizontal plane, the first short-circuit ring being disposed lower than the second short-circuit ring, the metal being introduced into the casting mold at a first gate (12, 34) of the casting mold at the first short-circuit ring (36) and at a second gate (13, 35) of the casting mold at the second short-circuit ring (37), a first flow front of the metal of the first gate meeting a second flow front of the metal of the second gate inside the casting mold in the second short-circuit ring.

2. The method according to claim 1,
**characterized in that**
the metal is introduced under pressure or in an unpressurized manner into the casting mold (10, 29).

3. The method according to claim 1 or 2,
**characterized in that**
the metal core is an iron core (32).

4. The method according to any one of the preceding claims,
**characterized in that**
50 %, preferably 75 %, especially preferentially 90 %, of a cavity (11, 30) of the casting mold (10, 29) is filled with the metal via the first gate (12, 34).

5. The method according to any one of the preceding claims,
**characterized in that**
at least one of the first and second gates (12, 13, 34, 35) is designed as a gate system having a plurality of gate cross sections and associated melt channels (33).

6. The method according to any one of the preceding claims,
**characterized in that**
the second gate (13, 35) is connected to a melt channel (33) which runs inside or outside the metal core.

7. The method according to any one of the preceding claims,
**characterized in that**
the metal is introduced at first via the first gate (12, 34) and subsequently via the second gate (13, 35) of the casting mold (10, 29).

8. The method according to any one of the preceding claims,
**characterized in that**
the first gate (12, 34) has a first cross section (D), which differs from a second cross section (d) of the second gate (13, 35).

9. The method according to any one of the preceding claims,
**characterized in that**
a piston-free casting machine or a casting machine having a piston is used.

10. The method according to any one of the preceding claims,
**characterized in that**
one casting machine per gate is used for the at least two gates (12, 13, 34, 35) at the first and at the second short-circuit ring (36, 37, 39).

11. The method according to any one of the preceding claims,
**characterized in that**
a laminar flow is at least partially formed in a cavity (11, 30) of the casting mold when inserting the metal into the casting mold (10, 29).

12. The method according to any one of the preceding claims,
**characterized in that**
an alloy content of the metal is 75 to 100 weight percent.

13. The method according to any one of the preceding claims,
**characterized in that**
an electrical conductance of the cast metal of the rotor (18, 38) is ≥ 45 MS/m, preferably ≥ 55 MS/m, especially preferentially 56 to 59 MS/m.

## Revendications

1. Procédé pour la production d'un rotor (18, 38) pour une machine électrique, notamment un moteur triphasé, le rotor étant formé par un noyau métallique, au moins une première et une deuxième bague court-circuitée (36, 37, 39) et des conducteurs lamellaires (25) qui relient les bagues court-circuitées, le procédé étant effectué avec une machine de coulée et un moule de coulée (10, 29), le noyau métallique étant disposé dans le moule de coulée et un métal étant fixé dans le moule de coulée sur le noyau métallique, le métal étant fondu et introduit dans le moule de coulée, le métal étant le cuivre, l'aluminium, l'argent ou un alliage d'un de ces métaux,
**caractérisé en ce que**
le rotor est disposé verticalement avec son axe de rotation (21) par rapport au plan horizontal, la première bague court-circuitée étant disposée plus bas que la deuxième bague court-circuitée, le métal étant introduit dans le moule de coulée à une première attaque de coulée (12, 34) du moule de coulée à la première bague court-circuitée (36), et à une deuxième attaque de coulée (13, 35) du moule de coulée à la deuxième bague court-circuitée (37), un premier front d'écoulement du métal de la première attaque de coulée rencontrant un deuxième front d'écoulement du métal de la deuxième attaque de coulée à l'intérieur du moule de coulée dans la deuxième bague court-circuitée.

2. Procédé selon la revendication 1,
**caractérisé en ce que**
le métal est introduit dans le moule de coulée (10, 29) sous pression ou sans pression.

3. Procédé selon la revendication 1 ou 2,
**caractérisé en ce que**
le noyau métallique est un noyau de fer (32).

4. Procédé selon l'une quelconque des revendications précédentes,
**caractérisé en ce que**
50 %, préférentiellement 75 %, de préférence particulière 90 %, d'une cavité (11, 30) du moule coulée (10, 29) sont remplies du métal via la première attaque de coulée (12, 34).

5. Procédé selon l'une quelconque des revendications précédentes,
**caractérisé en ce que**
au moins une de la première et deuxième attaque de coulée (12, 13, 34, 35) est réalisée comme un système d'attaque de coulée ayant une pluralité de sections transversales d'attaques de coulée et des canaux de fusion (33) associés.

6. Procédé selon l'une quelconque des revendications précédentes,
**caractérisé en ce que**
la deuxième attaque de coulée (11, 35) est connectée à un canal de fusion (33) qui s'étend à l'intérieur ou à l'extérieur du noyau métallique.

7. Procédé selon l'une quelconque des revendications précédentes,
**caractérisé en ce que**
le métal d'abord est introduit via la première attaque de coulée (12, 34), et ensuite via la deuxième attaque de coulée (13, 35) du moule de coulée (10, 29).

8. Procédé selon l'une quelconque des revendications précédentes,
**caractérisé en ce que**
la première attaque de coulée (12, 34) a une première section transversale (D) qui diffère d'une deuxième section transversale (d) de la deuxième attaque de coulée (13, 35).

9. Procédé selon l'une quelconque des revendications précédentes,
**caractérisé en ce qu'**
une machine de coulée sans piston ou une machine de coulée avec un piston est utilisée.

10. Procédé selon l'une quelconque des revendications précédentes,
**caractérisé en ce qu'**
une machine de coulée par attaque de coulée est utilisée pour les au moins deux attaques de coulée (12, 13, 34, 35) à la première et à la deuxième bague court-circuitée (36, 37, 39).

11. Procédé selon l'une quelconque des revendications précédentes,
**caractérisé en ce qu'**
un écoulement laminaire est au moins partiellement formé dans la cavité (11, 30) du moule de coulée lorsque le métal est introduit dans le moule de coulée (10, 29).

12. Procédé selon l'une quelconque des revendications précédentes,
**caractérisé en ce qu'**
un pourcentage du métal dans l'alliage est 75 à 100 pourcent en poids.

13. Procédé selon l'une quelconque des revendications précédentes,
**caractérisé en ce qu'**
une conductance électrique du métal coulé du rotor (18, 38) est ≥ 45 MS/m, préférentiellement ≥ 55 MS/m, de préférence particulière 56 à 59 MS/m.
